# EUROPÄISCHE PATENTANMELDUNG

(11) **EP 2 272 916 A1**
(43) Veröffentlichungstag der Anmeldung: **12.01.2011**
(21) Anmeldenummer: 10168094.0
(22) Anmeldetag: 01.07.2010
(51) Int. Cl.: C08L 83/04, C09D 183/04, C08L 83/07, C09D 183/07, C08F 2/48

(54) **Verfahren zur Herstellung von Siliconbeschichtungen und Siliconformkörpern aus durch Licht vernetzbaren Siliconmischungen**

(30) Priorität: 06.07.2009 DE 102009027486
(71) Anmelder: Wacker Chemie AG, 81737 München (DE)
(72) Erfinder: Angermaier, Klaus, 81825, München (DE); Müller, Philipp, 84489, Burghausen (DE)
(74) Vertreter: Gössmann, Christoph Tassilo

(57) **Zusammenfassung**

Verfahren zur Herstellung von Siliconbeschichtungen und Siliconformkörpern, bei dem
1) eine durch Licht vernetzbare Siliconmischung, die Polyorganosiloxan (A) der durchschnittlichen allgemeinen Formel (1)

R¹ₓR²_{y}SiO_{(4-x-y)/2} (1),

in der
**R¹**
einen einwertigen, gegebenenfalls halogen- oder cyanosubstituierten, gegebenenfalls über eine organische zweiwertige Gruppe an Silicium gebundenen C₁-C₁₀- Kohlenwasserstoffrest, der aliphatische Kohlenstoff- Kohlenstoff Mehrfachbindungen enthält,
**R²**
einen einwertigen, gegebenenfalls halogen- oder cyanosubstituierten, über SiC-gebundenen C₁-C₁₀- Kohlenwasserstoffrest, der frei ist von aliphatischen Kohlenstoff-Kohlenstoff Mehrfachbindungen
**x**
eine solche nicht negative zahl, dass mindestens zwei Reste R¹ in jedem Molekül vorhanden sind, und
**y**
eine nicht negative Zahl, so daß (x+y) im Bereich von durchschnittlich 1,8 bis 2,5 liegt, bedeuten, und

(B) mindestens zwei SiH-Funktionen pro Molekül enthaltende Organosiliciumverbindung und
(C) durch Licht von 200 bis 500 nm aktivierbaren Katalysator, der Cyclopentadienyl-Komplexe des Platin enthält, aufgebracht und vor oder nach dem Aufbringen auf 40 °C bis 250 °C erwärmt wird,

2) danach die aufgebrachte Siliconmischung mit Licht von 200 bis 500 nm bestrahlt wird.

## Beschreibung

Die Erfindung betrifft ein Verfahren zur Herstellung von Siliconbeschichtungen und Siliconformkörpern aus durch Licht vernetzbaren Siliconmischungen.

Bei vielen Anwendungen in der Elektro- und Elektronikindustrie ist das Arbeiten mit möglichst niederviskosen Siliconelastomeren gewünscht. Dies ist typischerweise dann der Fall, wenn entweder sehr enge geometrische Bereiche eines Bauteils mit Vergussmasse gefüllt werden sollen, die zu beschichtende oder vergießende Oberfläche möglichst schnell benetzt werden muss oder Material in sehr dünnen Schichten aufgebracht werden soll. Letzteres kann vor allem aus Kostengründen erwünscht sein.

Handelsübliche, niederviskose, Lösemittel freie Beschichtungsmaterialien erreichen niedrige Verarbeitungsviskositäten von bis zu 100 mPas (Dow Corning HC-2000: 130 mPas; Dow Corning 3-1965: 110 mPas; "Information über Dow Corning Schutzlacke, 1999 - 2005"). Mischungen mit noch niedrigeren Viskositäten ließen sich durch die Verwendung oligomerer Alkyl- und Alkenylsiloxane herstellen. Dies wird jedoch nicht realisiert, da die mechanischen Eigenschaften solcher Mischungen den Anwendungsanforderungen nicht mehr genügen.

Gleichwohl werden für die Anwendung Leiterplattenbeschichtung Lacke (auf Urethan- oder Epoxybasis) mit Viskositäten von 10 mPas und darunter eingesetzt.

Solch geringe Viskositäten lassen sich mit herkömmlichen Siliconmischungen nur durch die Verwendung von organischen Lösemitteln erreichen, was jedoch aus Gründen der Arbeitsplatzsicherheit und des Umweltschutzes nicht opportun ist.

Aufgabe der Erfindung ist es den Stand der Technik zu verbessern, insbesondere Siliconbeschichtungen und Siliconformkörper möglichst schnell herzustellen.

Gegenstand der Erfindung ist ein Verfahren zur Herstellung von Siliconbeschichtungen und Siliconformkörpern, bei dem
1) eine durch Licht vernetzbare Siliconmischung, die Polyorganosiloxan (A) der durchschnittlichen allgemeinen Formel (1)

   R¹ₓR²_{y}SiO_{(4-x-y)/2} (1),

   in der
   - **R¹**: einen einwertigen, gegebenenfalls halogen- oder cyanosubstituierten, gegebenenfalls über eine organische zweiwertige Gruppe an Silicium gebundenen C₁-C₁₀- Kohlenwasserstoffrest, der aliphatische Kohlenstoff- Kohlenstoff Mehrfachbindungen enthält,
   - **R²**: einen einwertigen, gegebenenfalls halogen- oder cyanosubstituierten, über SiC-gebundenen C₁-C₁₀- Kohlenwasserstoffrest, der frei ist von aliphatischen Kohlenstoff-Kohlenstoff Mehrfachbindungen
   - **x**: eine solche nicht negative Zahl, dass mindestens zwei Reste R¹ in jedem Molekül vorhanden sind, und
   - **y**: eine nicht negative Zahl, so daß **(x+y)** im Bereich von durchschnittlich 1,8 bis 2,5 liegt, bedeuten, und

   (B) mindestens zwei SiH-Funktionen pro Molekül enthaltende Organosiliciumverbindung und
   (C) durch Licht von 200 bis 500 nm aktivierbaren Katalysator Cyclopentadienyl-Komplexe des Platin enthält,
      aufgebracht und vor oder nach dem Aufbringen auf 40 °C bis 250 °C erwärmt wird,
2) danach die aufgebrachte Siliconmischung mit Licht von 200 bis 500 nm bestrahlt wird.

Die vorliegende Erfindung nutzt die Temperaturabhängigkeit der Viskosität von Siliconpolymeren aus. Wird ein Siliconpolymer, oder eine Mischung daraus, erwärmt, sinkt die Viskosität; so sinkt die Viskosität eines PDMS-Öls von einer Viskosität von 100 mPas auf 30 mPas ab, wenn es von 25°C auf 100°C erwärmt wird. Es ist also möglich eine Siliconmischung dann mit erniedrigter Viskosität zu verarbeiten, wenn man die Temperatur der Mischung entsprechend erhöht. Dieses Prinzip kann jedoch bei den bekannten additionsvernetzenden, nicht UV-vernetzenden Siliconen nicht angewandt werden, da diese Materialien bei höherer Temperatur schnell vernetzen würden, und somit nicht mehr verarbeitbar wären.

Durch die Verwendung UV-vernetzbarer Silicone, welche zugleich bei Lichtausschluss nicht thermisch vernetzbar sind, ist es möglich Siliconmischungen mit vergleichsweise hoher Ausgangsviskosität bei Raumtemperatur (und damit erhöhten, besseren mechanischen Eigenschaften) durch Wärmezufuhr in ihrer Viskosität deutlich abzusenken, und dadurch in ihrer Verarbeitbarkeit zu verbessern, ohne sie zugleich auszuhärten. Die Aushärtung geschieht anschließend durch Lichtexposition, sobald der Silicon an den vom Verarbeiter gewünschten Stellen appliziert ist.

Voraussetzung für das Gelingen dieses Effekts war es Platinkatalysatoren einzusetzen, die selbst bei höherer Temperatur zu keiner Aktivierung des Hydrosilylierungsprozesses führen, sondern allein durch die Exposition von UV-Licht aktiviert werden.

Diese Siliconmischungen können z.B. auf eine Temperatur von 150°C für einige Stunden erhitzt werden ohne zu vulkanisieren. Bei der Verarbeitung kann es von Vorteil sein nicht nur die Siliconmischung aufzuheizen, sondern auch das Bauteil entsprechend vorzuwärmen.

Die Bestrahlung der geformten Siliconmischung mit Licht dauert bevorzugt mindestens 1 Sekunde, besonders bevorzugt mindestens 5 Sekunden und bevorzugt höchstens 500 Sekunden, besonders bevorzugt höchstens 100 Sekunden.

Durch die einsetzende Hydrosilylierungsreaktion beginnt die Vernetzung der Siliconmischung - sie geliert.

Die Siliconmischung weist vorzugsweise eine Viskosität [D = 0,5 / 25°C] von 100 bis 2000000 mPas, von bevorzugt 1000 bis 20000 mPas, insbesondere höchstens 100000 mPas auf.

Die durch Licht von 200 bis 500 nm vernetzbare Siliconmischung weist Polyorganosiloxan (A) auf, das der durchschnittlichen allgemeinen Formel (1) entspricht

R¹ₓR²_{y}SiO_{(4-x-y)/2} (1),

in der
- R¹: einen einwertigen, gegebenenfalls halogen- oder cyanosubstituierten, gegebenenfalls über eine organische zweiwertige Gruppe an Silicium gebundenen C₁-C₁₀- Kohlenwasserstoffrest, der aliphatische Kohlenstoff- Kohlenstoff Mehrfachbindungen enthält,
- **R²**: einen einwertigen, gegebenenfalls halogen- oder cyanosubstituierten, über SiC-gebundenen C₁-C₁₀- Kohlenwasserstoffrest, der frei ist von aliphatischen Kohlenstoff-Kohlenstoff Mehrfachbindungen
- **x**: eine solche nicht negative Zahl, dass mindestens zwei Reste **R¹** in jedem Molekül vorhanden sind, und
- **y**: eine nicht negative Zahl, so daß **(x+y)** im Bereich von durchschnittlich 1,8 bis 2,5 liegt, bedeuten.

Die Alkenylgruppen **R¹** sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R¹** an Silicium der Polymerkette gebunden sein können, bestehen beispielsweise aus Oxyalkyleneinheiten, wie solche der allgemeinen Formel (2)

-(O)ₘ[(CH₂)ₙO]ₒ- (2),

in der
- **m**: die Werte 0 oder 1, insbesondere 0,
- **n**: Werte von 1 bis 4, insbesondere 1 oder 2 und
- **o**: Werte von 1 bis 20, insbesondere von 1 bis 5 bedeuten.

Die Oxyalkyleneinheiten der allgemeinen Formel (2) sind links an ein Siliciumatom gebunden.

Die Reste **R¹** können in jeder Position der Polymerkette, insbesondere an den endständigen Siliciumatomen, gebunden sein.

Beispiele für unsubstituierte Reste **R²** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R²** sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

**R²** weist vorzugsweise 1 bis 6 Kohlenstoffatome auf. Insbesondere bevorzugt sind Methyl und Phenyl.

Bestandteil (A) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten, ist typischerweise sehr gering, vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})₂(ViMeSiO)ₚ(Me₂SiO)_{q} (3),

entsprechen, wobei die nicht negativen ganzen Zahlen **p** und **q** folgende Relationen erfüllen: **p**>0, 50<**(p+q)**<20000, vorzugsweise 200<**(p+q)**<1000, und 0<(**p**+1)/**(p+q)**<0,2.

Die Viskosität des Polyorganosiloxans (A) beträgt bei 25°C vorzugsweise 0,5 bis 100000 Pa·s, insbesondre 1 bis 2000 Pa.s.

Die mindestens zwei SiH-Funktionen pro Molekül enthaltende Organosiliciumverbindung (B), weist vorzugsweise eine Zusammensetzung der allgemeinen Formel (4) auf

HₕR₃₋ₕSiO(SiR₂O)ₒ(SiR₂₋ₓHₓO)ₚSiR₃₋ₕHₕ (4)

in der
**R** einen einwertigen, gegebenenfalls halogen- oder cyanosubstituierten, über SiC-gebundenen C₁-C₁₈-Kohlenwasserstoffrest bedeutet, der frei ist von aliphatischen Kohlenstoff-Kohlenstoff Mehrfachbindungen,
h 0, 1 oder 2,
o 0 oder eine ganze Zahl von 1 bis 1 000,
p eine ganze Zahl von 1 bis 1 000 ist und
x 1 oder 2 ist.

Beispiele für **R** sind die für **R²** angegebenen Reste. **R** weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden Organosiliciumverbindung (B). Bei Verwendung einer nur zwei SiH-Bindungen pro Molekül aufweisenden Organosiliciumverbindung (B) empfiehlt sich die Verwendung eines Polyorganosiloxans (A), das über mindestens drei Alkenylgruppen pro Molekül verfügt.

Der Wasserstoffgehalt der Organosiliciumverbindung (B), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (B) enthält vorzugsweise mindestens drei und höchstens 600 Siliciumatome pro Molekül. Bevorzugt ist die Verwendung von Organosiliciumverbindung (B), die 4 bis 200 Siliciumatome pro Molekül enthält.

Die Struktur der Organosiliciumverbindung (B) kann linear, verzweigt, cyclisch oder netzwerkartig sein.

Besonders bevorzugte Organosiliciumverbindungen (B) sind lineare Polyorganosiloxane der allgemeinen Formel (5)

(HR⁴₂SiO_{1/2})_{c}(R⁴₃SiO_{1/2})_{d}(HR⁴SiO_{2/2})ₑ(R⁴₂SiO_{2/2})_{f} (5),

wobei
**R⁴** die Bedeutungen von **R** hat und
die nicht negativen ganzen Zahlen **c, d, e** und **f** folgende Relationen erfüllen: (**c+d**)=2, (**c+e**)>2, 5<(**e+f**)<200 und 1<**e**/(**e +f**)<0,1.

Die SiH-funktionelle Organosiliciumverbindung (B) ist vorzugsweise in einer solchen Menge in der vernetzbaren Siliconmasse enthalten, dass das Molverhältnis von SiH-Gruppen zu Alkenylgruppen bei 0,5 bis 5, insbesondere bei 1,0 bis 3,0 liegt.

Als Katalysatoren (C) sind Cyclopentadienyl-Komplexe des Platin, vorzugsweise der allgemeinen Formel (6) geeignet, 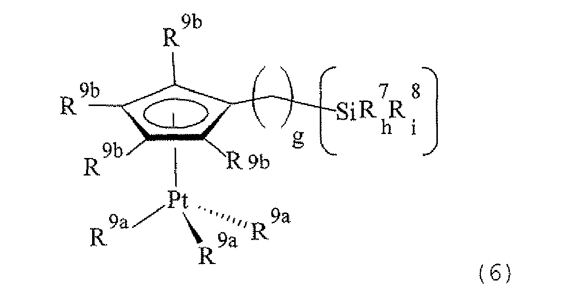 wobei
**g** = 1 bis 8,
**h** = 0 bis 2,
**i** = 1 bis 3,
**R⁷** unabhängig voneinander, gleich oder verschieden einen monovalenten, unsubstituierten oder substituierten, linearen, cyclischen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können,
**R⁸** unabhängig voneinander, gleiche oder verschiedene hydrolysierbare funktionelle Gruppen, ausgewählt aus der Gruppe enthaltend
Carboxy -O-C(O)R¹⁰,
Oxim -O-N=CR¹⁰₂,
Alkoxy -OR¹⁰,
Alkenyloxy -O-R¹²
Amid -NR¹⁰-C(O)R¹¹,
Amin -NR¹⁰R¹¹,
Aminoxy -O-NR¹⁰-OR¹¹, mit
**R¹⁰** unabhängig voneinander, gleich oder verschieden H, Alkyl, Aryl, Arylalkyl, Alkylaryl,
**R¹¹** unabhängig voneinander, gleich oder verschieden Alkyl, Aryl, Arylalkyl, Alkylaryl,
**R¹²** einen linearen oder verzweigten, aliphatisch ungesättigten organischen Rest,
**R^{9a}** unabhängig voneinander, gleich oder verschieden Alkyl, Aryl, Arylalkyl, Alkylaryl mit 1 bis 30 Kohlenstoffatomen, wobei die Wasserstoffe durch -Hal oder -SiR₃⁹ substituiert sein können, mit
**R⁹** unabhängig voneinander, gleich oder verschieden einen monovalenten, unsubstituierten oder substituierten, linearen, cyclischen oder verzweigten Kohlenwasserstoffrest,
**R^{9b}** unabhängig voneinander, gleich oder verschieden Wasserstoff oder einen monovalenten, unsubstituierten oder substituierten, linearen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können und die mit dem Cyclopentadienylrest annelierte Ringe bilden können, bedeuten.

Bevorzugte Reste **R⁷** sind lineare gesättigte Kohlenwasserstoffreste mit 1 bis 8 Kohlenstoffatomen. Weiterhin bevorzugt ist der Phenylrest.

Bevorzugte Reste **R⁸** sind Methoxy-, Ethoxy-, Acetoxy- und 2-Methoxyethoxy-Gruppen.

Bevorzugte Reste **R^{9a}** sind lineare und verzweigte, gegebenenfalls substituierte Alkylreste wie Methyl-, Ethyl-, Propyl- oder Butylreste.

Bevorzugte Reste **R^{9b}** sind lineare und verzweigte, gegebenenfalls substituierte lineare Alkylreste wie Methyl-, Ethyl-, Propyl- oder Butylreste. Weiterhin bevorzugt sind gegebenenfalls weiter substituierte annelierte Ringe wie zum Beispiel der Indenyl- oder der Fluorenylrest.

Besonders bevorzugt als Katalysator (C) ist der Methylcyclopentadienyltrimethylplatin-Komplex (MeCp(PtMe₃)).

Katalysator (C) kann in jeder beliebigen Form eingesetzt werden, beispielsweise auch in Form von Hydrosilylierungskatalysator enthaltenden Mikrokapseln, oder Organopolysiloxanpartikeln, wie beschrieben in EP-A-1006147.

Der Gehalt an Hydrosilylierungskatalysatoren (C) wird vorzugsweise so gewählt, dass die Siliconmischung einen Gehalt an Metall der Platingruppe von 0,1-200 ppm, bevorzugt von 0,5-40 ppm besitzt.

Die Siliconmischung ist bevorzugt transparent und frei von Licht absorbierenden Füllstoffen.

Die Siliconmischung kann jedoch auch Füllstoff (D) enthalten. Beispiele für nicht verstärkende Füllstoffe (D) sind Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bäriumsulfat, Calciumcarbonat, Gips, Siliciumnitrid, Siliciumcarbid, Bornitrid, Glas- und Kunststoffpulver. Verstärkende Füllstoffe, also Füllstoffe mit einer BET-Oberfläche von mindestens 50 m²/g, sind beispielsweise pyrogen hergestellte Kieselsäure, gefällte Kieselsäure, Ruß, wie Furnace- und Acetylenruß und Silicium-Aluminium-Mischoxide großer BET-Oberfläche. Faserförmige Füllstoffe sind beispielsweise Asbest sowie Kunststoffasern. Die genannten Füllstoffe können hydrophobiert sein, beispielsweise durch die Behandlung mit Organosilanen bzw. - siloxanen oder durch Verätherung von Hydroxylgruppen zu Alkoxygruppen. Es kann eine Art von Füllstoff, es kann auch ein Gemisch von mindestens zwei Füllstoffen eingesetzt werden.

Wenn die Siliconmischungen Füllstoff (D) enthalten, beträgt dessen Anteil vorzugsweise 2 bis 60 Gew.-%, insbesondere 5 bis 50 Gew.-% bezogen auf die gesamte Siliconmasse.

Die Siliconmischungen können als Bestandteil (E) weitere Zusätze zu einem Anteil von bis zu 70 Gew.-%, vorzugsweise 0,0001 bis 40 Gew.-%, bezogen auf die gesamte Siliconmasse, enthalten. Diese Zusätze können z.B. harzartige Polyorganosiloxane, die von den Diorganopolysiloxanen (A) und (B) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Farbstoffe, Pigmente usw. Des Weiteren können als Bestandteil (E) thixotropierende Bestandteile, wie hochdisperse Kieselsäure oder andere handelsübliche Thixotropieadditive enthalten sein.

Zusätzlich können auch als Kettenverlängerer Siloxane der Formel HSi(CH₃)₂-[O-Si(CH₃)₂]_{w}-H vorhanden sein, wobei **w** Werte von 1 bis 1000 bedeutet.

Enthalten sein können des Weiteren Zusätze (E), die der gezielten Einstellung der Verarbeitungszeit, Anspringtemperatur und Vernetzungsgeschwindigkeit der Siliconmischung dienen. Diese Inhibitoren und Stabilisatoren sind auf dem Gebiet der vernetzenden Massen sehr gut bekannt.

Zusätzlich können auch Additive hinzugefügt werden, die den Druckverformungsrest verbessern. Zusätzlich können auch Hohlkörper hinzugefügt werden. Zusätzlich können auch Treibmittel zur Erzeugung von Schäumen hinzugefügt werden. Zusätzlich können auch nicht vinylfunktionalisierte Polydiorganosiloxane hinzugefügt werden.

Die Compoundierung der Siliconmischung erfolgt durch Mischen der oben aufgeführten Komponenten in beliebiger Reihenfolge.

Bevorzugte Ausführungsformen des Verfahrens sind Anwendungen in der Elektronikindustrie, das Vergießen und Beschichten von Elektronikbauteilen.

Gegenstand der Erfindung sind auch Siliconbeschichtungen und Siliconformkörper, die durch das erfindungsgemäße Verfahren erhältlich sind.

Alle vorstehenden Symbole der vorstehenden Formeln weisen ihre Bedeutungen jeweils unabhängig voneinander auf. In allen Formeln ist das Siliciumatom vierwertig.

In den nachfolgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

**Siliconmischung A**

| | Teile |
|---|---|
| Vinylpolymer 200 | 65 |
| PDMS-ÖL (Öl AK 50) | 30 |
| H-Siloxan | 5 |
| Platinkatalysator | 0,01 |

**Materialeigenschaften**

| | Wert [mPas] |
|---|---|
| Viskosität [25°C] | 170 |
| Viskosität [100°C] | 50 |
| Viskosität [175°C] | 22 |

**Siliconmischung B**

| | Teile |
|---|---|
| Vinylpolymer 1000 | 92 |
| H-Siloxan | 8 |
| Platinkatalysator | 0,01 |

**Materialeigenschaften**

| | Wert [mPas] |
|---|---|
| Viskosität [25°C] | 950 |
| Viskosität [125°C] | 200 |

Dabei gilt:
- für Vinylpolymer 1000: ViMe2SiO-(Me2SiO)n-SiMe2Vi mit n = 200
- für Vinylpolymer 200: ViMe2SiO-(Me2SiO)n-SiMe2Vi mit n = 95
- Öl AK 50: Me3SiO-(Me2SiO)n-SiMe3 mit n = 40
- für H-Siloxan: MerH(3-r)SiO-(MeHSiO)p-(Me2SiO)q-SiMerH(3-r) mit
   r = 2 oder 3 und p + q = 50
- für Platinkatalysator: MeCp(PtMe3)

Ein Elektronikbauteil der Größe 50 x 50 mm wird mit der oben genannten Siliconmischung A vollständig bedeckt. Bei dem Bauteil handelt es sich um eine Steckerverbindung, bei der der zu vergießende Boden von einer Wandung begrenzt ist.

Im ersten Versuch wird das Material bei einer Temperatur von 25°C auf das Bauteil mittels eines Dosierapparates aufgebracht. Innerhalb von 14 sek ist der Boden des Bauteils vollständig bedeckt; dabei werden 2,2 Gramm Silicon aufgetragen.

Im zweiten Versuch wird das Material bei einer Temperatur von 100°C auf das entsprechend vorgewärmte Bauteil aufgebracht. Innerhalb von 8 Sek. ist der Boden vollständig bedeckt; dabei werden 1,4 Gramm Silicon aufgetragen.

In beiden Fällen wird das Silicon anschließend mittels UV-Licht zur Aushärtung gebracht.

Ein Elektronikbauteil der Größe 50 x 50 mm wird mit der oben genannten Siliconmischung B vollständig bedeckt. Bei dem Bauteil handelt es sich um eine Steckerverbindung, bei der der zu vergießende Boden von einer Wandung begrenzt ist.

Im ersten Versuch wird das Material bei einer Temperatur von 25°C auf das Bauteil mittels eines Dosierapparates aufgebracht. Innerhalb von 30 sek ist der Boden des Bauteils vollständig bedeckt; dabei werden 2,2 Gramm Silicon aufgetragen.

Im zweiten Versuch wird das Material bei einer Temperatur von 125°C auf das entsprechend vorgewärmte Bauteil aufgebracht. Innerhalb von 16 sek ist der Boden vollständig bedeckt; dabei werden 1,8 Gramm Silicon aufgetragen.

In beiden Fällen wird das Silicon anschließend mittels UV-Licht zur Aushärtung gebracht.

## Patentansprüche

1. Verfahren zur Herstellung von Siliconbeschichtungen und Siliconformkörpern, bei dem
1) eine durch Licht vernetzbare Siliconmischung, die Polyorganosiloxan (A) der durchschnittlichen allgemeinen Formel (1)
R¹ₓR²_{y}SiO_{(4-x-y)/2} (1),
in der
**R¹** einen einwertigen, gegebenenfalls halogen- oder cyanosubstituierten, gegebenenfalls über eine organische zweiwertige Gruppe an Silicium gebundenen C₁-C₁₀- Kohlenwasserstoffrest, der aliphatische Kohlenstoff- Kohlenstoff Mehrfachbindungen enthält,
**R²** einen einwertigen, gegebenenfalls halogen- oder cyanosubstituierten, über SiC-gebundenen C₁-C₁₀- Kohlenwasserstoffrest, der frei ist von aliphatischen Kohlenstoff-Kohlenstoff Mehrfachbindungen
**x** eine solche nicht negative Zahl, dass mindestens zwei Reste **R¹** in jedem Molekül vorhanden sind, und
**y** eine nicht negative Zahl, so daß **(x+y)** im Bereich von durchschnittlich 1,8 bis 2,5 liegt, bedeuten, und
(B) mindestens zwei SiH-Funktionen pro Molekül enthaltende Organosiliciumverbindung und
(C) durch Licht von 200 bis 500 nm aktivierbaren Katalysator, der Cyclopentadienyl-Komplexe des Platin enthält, aufgebracht und vor oder nach dem Aufbringen auf 40 °C bis 250 °C erwärmt wird,
2) danach die aufgebrachte Siliconmischung mit Licht von 200 bis 500 nm bestrahlt wird.

2. Verfahren nach Anspruch 1, bei dem die mindestens zwei SiH-Funktionen pro Molekül enthaltende Organosiliciumverbindung (B) eine Zusammensetzung der allgemeinen Formel (4)
HₕR₃₋ₕSiO(SiR₂O)ₒ(SiR₂₋ₓHₓO)ₚSiR₃₋ₕHₕ (4)
in der
R einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen,
h 0, 1 oder 2,
o 0 oder eine ganze Zahl von 1 bis 1 000,
p eine ganze Zahl von 1 bis 1 000 ist und
x 1 oder 2 ist, aufweist.

3. Verfahren nach Anspruch 1 oder 2, bei dem das Polyorganosiloxan (A) der durchschnittlichen allgemeinen Formel (1) ein
Vinylgruppen enthaltendes Polydimethylsiloxan ist, dessen Moleküle der allgemeinen Formel (3)
(ViMe₂SiO_{1/2})₂(ViMeSiO)ₚ(Me₂SiO)_{q} (3),
entsprechen, wobei die nicht negativen ganzen Zahlen p und q folgende Relationen erfüllen: **p**≥0, 50<**(p+q)**<20000.

4. Verfahren nach Anspruch 1 bis 3, bei dem als Katalysator der Cyclopentadienyl-Komplex des Platins, der allgemeinen Formel (6) 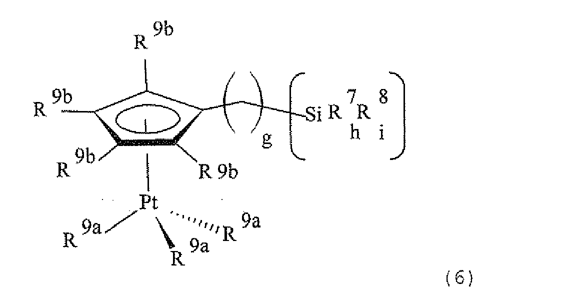 wobei
g = 1 bis 8,
h = 0 bis 2,
i = 1 bis 3,
R⁷ unabhängig voneinander, gleich oder verschieden einen monovalenten, unsubstituierten oder substituierten, linearen, cyclischen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können,
R⁸ unabhängig voneinander, gleiche oder verschiedene hydrolysierbare funktionelle Gruppen, ausgewählt aus der Gruppe enthaltend
Carboxy -O-C(O)R¹⁰,
Oxim -O-N=CR¹⁰₂,
Alkoxy -OR¹⁰,
Alkenyloxy -O-R¹²
Amid -NR¹⁰-C(O)R¹¹,
Amin -NR¹⁰R¹¹,
Aminoxy -O-NR¹⁰R¹¹, mit
R¹⁰ unabhängig voneinander, gleich oder verschieden H, Alkyl, Aryl, Arylalkyl, Alkylaryl,
R¹¹ unabhängig voneinander, gleich oder verschieden Alkyl, Aryl, Arylalkyl, Alkylaryl,
R¹² einen linearen oder verzweigten, aliphatisch ungesättigten organischen Rest,
R^{9a} unabhängig voneinander, gleich oder verschieden Alkyl, Aryl, Arylalkyl, Alkylaryl mit 1 bis 30 Kohlenstoffatomen, wobei die Wasserstoffe durch -Hal oder -SiR₃⁹ substituiert sein können, mit
R⁹ unabhängig voneinander, gleich oder verschieden einen monovalenten, unsubstituierten oder substituierten, linearen, cyclischen oder verzweigten Kohlenwasserstoffrest,
R^{9b} unabhängig voneinander, gleich oder verschieden Wasserstoff oder einen monovalenten, unsubstituierten oder substituierten, linearen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können und die mit dem Cyclopentadienylrest annelierte Ringe bilden können,
bedeuten, verwendet wird.

5. Verfahren nach Anspruch 1 bis 3, bei dem als Katalysator der Methylcyclopentadienyltrimethylplatin-Komplex verwendet wird.

6. Siliconbeschichtungen und Siliconformkörper, die erhältlich sind durch ein Verfahren nach Anspruch 1 bis 5.
